# EUROPEAN PATENT APPLICATION

(11) **EP 2 311 664 A1**
(43) Date of publication of application: **20.04.2011**
(21) Application number: 09013032.9
(22) Date of filing: 15.10.2009
(51) Int. Cl.: B60C 23/04

(54) **Method for combining tire pressure monitoring with keyless entry**

(71) Applicant: Delta Electronics, Inc., Taoyuan Hsien 33341 (TW)
(72) Inventor: Sun, Chun-Yi, Taoyuan Hsien 33341 (TW); Lin, Jon-Hong, Taoyuan Hsien 33341 (TW)
(74) Representative: TER MEER - STEINMEISTER & PARTNER GbR

(57) **Abstract**

A method for combining tire pressure monitoring with keyless entry, is applied in a vehicle (10) and a remote controller (20), the vehicle (10) includes a vehicle radio frequency transceiver unit (106), an engine (102), a vehicle door lock (104) and a tire (110). The tire (110) includes a tire radio frequency transceiver unit (112) and a tire pressure sensor unit (114). The tire radio frequency transceiver unit (112) transmits a tire pressure information signal (S3). The method including the steps of: transmitting a keyless entry radio frequency signal (S1) via the remote controller (20); receiving the keyless entry radio frequency signal (S1) via the vehicle radio frequency transceiver unit (106), and unlocking the vehicle door lock (104); starting the vehicle (10); and changing an emitting cycle of the tire pressure information signal (S3) transmitted by the tire radio frequency transceiver unit (112) into a first cycle.

## Description

### BACKGROUND

The present invention relates to a method for tire pressure monitoring and, more particularly, to a method for combining tire pressure monitoring with keyless entry.

When a tire pressure of a vehicle is abnormal, the abnormal tire pressure not only will shorten a service life of the tire and increase a fuel consumption of the vehicle, but also will affect a brake performance of the vehicle or increase probability of a flat tire. In order to insure a running safety of vehicles, it is become increasingly desirable to using a tire pressure monitoring system (TPMS). The tire pressure monitoring system can prevent traffic accidents caused by an abnormal tire pressure. Typically, the tire pressure monitoring system employed in vehicles includes a tire pressure sensor, a first radio frequency transceiver, a second radio frequency transceiver and a monitor. The tire pressure sensor and the first radio frequency transceiver are located at a position of the tire. The second radio frequency transceiver and the monitor are located in the vehicle. After the tire pressure sensor monitors a tire pressure data, the tire pressure data is transmitted to the second radio frequency transceiver via the first radio frequency transceiver. Then, the monitor displays the tire pressure data.

Keyless entry systems are extensively used in vehicles to replace conventional keys. The keyless entry system has two different types. One is remote keyless entry (RKE) system, and the other is passive keyless entry (PKE) system. A user needs to press a button of a remote controller to unlock a vehicle door when using the remote keyless entry system. However, when using the passive keyless entry system, the user needn't to press the remote controller. As long as the remote controller is approached to the vehicle, the vehicle door is unlocked. In both of the remote keyless entry system and the passive keyless entry system, the remote controller has a radio frequency transceiver, and a corresponding radio frequency transceiver is mounted in the vehicle.

The tire pressure monitoring system and the keyless entry system described above are individual systems, and haven't any shared components. That is, the vehicle has a set of radio frequency transceivers and other related components used for the tire pressure monitoring system, and another set of radio frequency transceivers and other related components used for the keyless entry system. However, the tire pressure monitoring system and the keyless entry system transmit information on a same frequency. Therefore, a manufacturing cost is high.

### BRIEF SUMMARY

The present invention provides a method for combining tire pressure monitoring with keyless entry which can reduce a manufacturing cost.

To achieve at least one of the above-mentioned advantages or other advantages, the present invention provides a method for combining tire pressure monitoring with keyless entry, is applied in a vehicle and a remote controller, the vehicle comprises a vehicle radio frequency transceiver unit, an engine, at least one vehicle door lock and at least one tire, the tire comprises a tire radio frequency transceiver unit and a tire pressure sensor unit, after the tire pressure sensor unit monitors a pressure of the tire, the tire radio frequency transceiver unit transmits a tire pressure information signal, the method for combining tire pressure monitoring with keyless entry comprising the steps of: transmitting a keyless entry radio frequency signal via the remote controller; receiving the keyless entry radio frequency signal via the vehicle radio frequency transceiver unit, and unlocking the vehicle door lock; starting the vehicle; and changing an emitting cycle of the tire pressure information signal transmitted by the tire radio frequency transceiver unit into a first cycle.

In an embodiment of the present invention, after the step of changing an emitting cycle of the tire pressure information signal transmitted by the tire radio frequency transceiver unit into a first cycle, the method further comprising a step of changing the emitting cycle of the tire pressure information signal transmitted by the tire radio frequency transceiver unit into a second cycle after the engine is stopped, and the first cycle is shorter than or equal to the second cycle.

In another embodiment of the present invention, after the step of changing an emitting cycle of the tire pressure information signal transmitted by the tire radio frequency transceiver unit into a first cycle, the method further comprising a step of changing the emitting cycle of the tire pressure information signal transmitted by the tire radio frequency transceiver unit into a second cycle after the engine is stopped, and the first cycle is shorter than or equal to the second cycle. The first cycle is once every ten seconds, and the second cycle is once every twenty minutes.

In the method for combining tire pressure monitoring with keyless entry, the tire pressure monitoring system and the keyless entry system share a set of radio frequency transceiver units, so that a manufacturing cost is reduced.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a schematic, block diagram illustrating a method for combining tire pressure monitoring with keyless entry applied in a vehicle and a remote controller in accordance with the present invention.

FIG. 2 is a flow chart of the method for combining tire pressure monitoring with keyless entry of FIG. 1.

Other objectives, features and advantages of the present invention will be further understood from the further technological features disclosed by the embodiments of the present invention wherein there are shown and described preferred embodiments of this invention, simply by way of illustration of modes best suited to carry out the invention.

### DETAILED DESCRIPTION

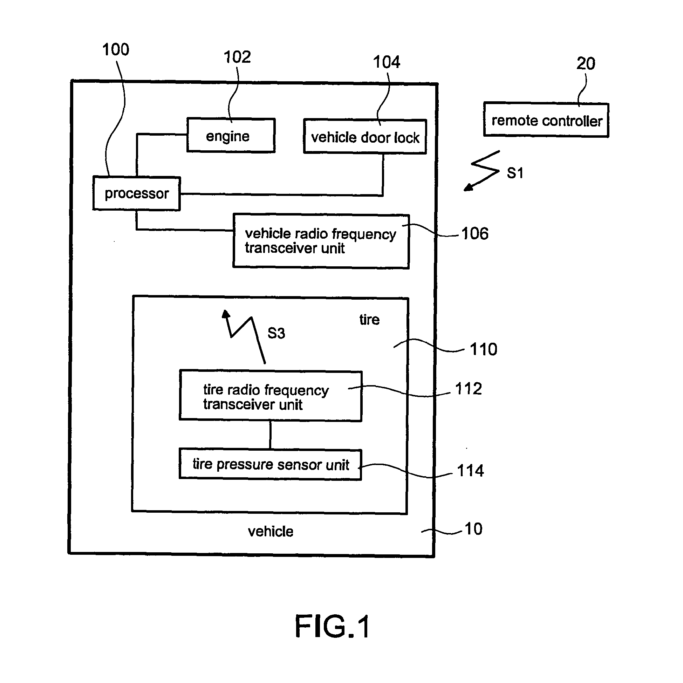

FIG. 1 is a schematic, block diagram illustrating a method for combining tire pressure monitoring with keyless entry applied in a vehicle and a remote controller in accordance with the present invention. Referring to FIG. 1, the method for combining tire pressure monitoring with keyless entry of this embodiment is applied in a vehicle 10 and a remote controller 20. The vehicle 10 includes a processor 100, a vehicle radio frequency transceiver unit 106, an engine 102, at least one vehicle door lock 104 and at least one tire 110.

The processor 100 is electronically connected to the vehicle radio frequency transceiver unit 106, the engine 102 and the vehicle door lock 104. Thereby, the processor 100 can process a signal of the vehicle radio frequency transceiver unit 106, control the ignition of the engine 102 and the vehicle door lock 104.

The tire 110 includes a tire radio frequency transceiver unit 112 and a tire pressure sensor unit 114 electronically connected to the tire radio frequency transceiver unit 112. After the tire pressure sensor unit 114 monitors a pressure of the tire 110, the tire radio frequency transceiver unit 112 transmits a tire pressure information signal S3. The vehicle radio frequency transceiver unit 106 receives the tire pressure information signal S3, then the pressure condition of the tire 110 is presented to the user. The vehicle radio frequency transceiver unit 106 and the tire radio frequency transceiver unit 112 are capable of transmitting and receiving a radio frequency signal, thereby communicating with each other.

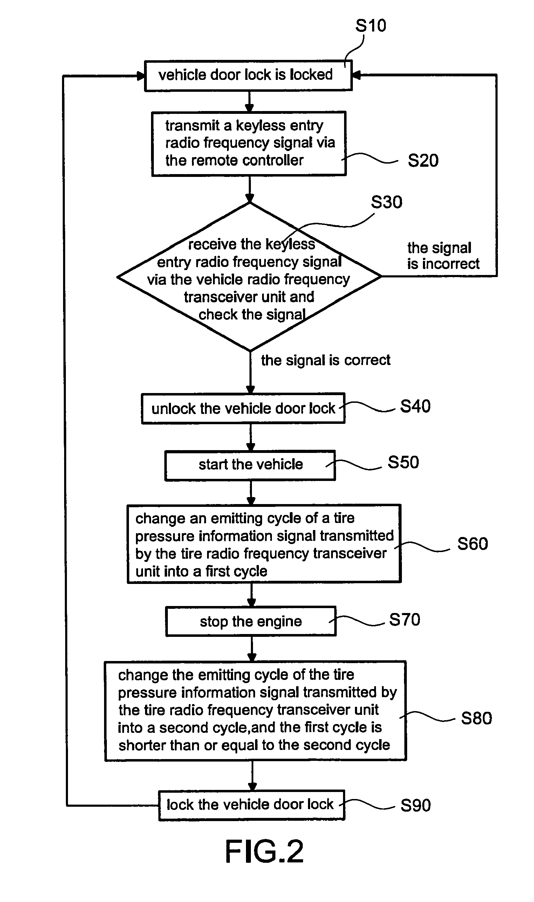

FIG. 2 is a flow chart of a method for combining tire pressure monitoring with keyless entry. Referring to FIG. 2, in step S10, the lock 104 is locked. At this time, in step S20, the remote controller 20 transmits a keyless entry radio frequency signal S1. After that, in step S30, the vehicle radio frequency transceiver unit 106 receives the keyless entry radio frequency signal S1, and the keyless entry radio frequency signal S1 is checked. If the keyless entry radio frequency signal S1 is incorrect, the procedure returns to step S10. If the keyless entry radio frequency signal S1 is correct, then in step S40, the vehicle door lock 104 is unlocked.

In the checking process, the vehicle radio frequency transceiver unit 106 transmits the keyless entry radio frequency signal S1 to the processor 100, then the processor 100 processes the keyless entry radio frequency signal S1. If the keyless entry radio frequency signal S1 is correct, the processor 100 will control the vehicle door lock 104 to be unlocked.

Next, in step S50, the vehicle 10 is started. In step S60, an emitting cycle of the tire pressure information signal S3 transmitted by the tire radio frequency transceiver unit 112 is changed into a first cycle. In step S70, the engine 102 is stopped. After that, in step S80, the emitting cycle of the tire pressure information signal S3 transmitted by the tire radio frequency transceiver unit 112 is changed into a second cycle. The first cycle is shorter than or equal to the second cycle. For example, the first cycle is once every ten seconds, and the second cycle is once every twenty minutes. At last, in step S90, the vehicle door lock 104 is locked.

In step S60 described above, after the vehicle 10 is started, the processor 100 generates a cycle changing command. The cycle changing command is transmitted to the tire radio frequency transceiver unit 112 via the vehicle radio frequency transceiver unit 106, so as to decrease the emitting cycle of the tire pressure information signal S3, thereby monitoring pressures of the tire 110 continually.

In step S80 described above, after the engine 102 of the vehicle 10 is stopped, the processor 100 further generates a cycle changing command. The cycle changing command is transmitted to the tire radio frequency transceiver unit 112 via the vehicle radio frequency transceiver unit 106, so as to increase the emitting cycle of the tire pressure information signal S3, thereby reducing a power consumption of the tire radio frequency transceiver unit 112 and the tire pressure sensor unit 114.

The method for combining tire pressure monitoring with keyless entry has the following advantages: First, the tire pressure monitoring system and the keyless entry system share a set of radio frequency transceiver units, so that a manufacturing cost is reduced. Second, a function of the keyless entry system is firstly actuated, such as unlocking the vehicle door lock. Then, after the vehicle is started, the emitting cycle of the tire pressure information signal transmitted by the tire pressure monitoring system is changed (decreased). After the engine is stopped, the emitting cycle of the tire pressure information signal transmitted by the tire pressure monitoring system is changed (increased), so that a power consumption of the tire pressure monitoring system and the keyless entry system is reduced. Furthermore, the signal generated by the keyless entry system cannot interfere with the signal generated by the tire pressure monitoring system, so that the keyless entry system and the tire pressure monitoring system are easy to share the components.

## Claims

1. A method for combining tire pressure monitoring with keyless entry, is applied in a vehicle (10) and a remote controller (20), the vehicle (10) comprises a vehicle radio frequency transceiver unit (106), an engine (102), at least one vehicle door lock (104) and at least one tire (110), the tire (110) comprises a tire radio frequency transceiver unit (112) and a tire pressure sensor unit (114), after the tire pressure sensor unit (114) monitors a pressure of the tire (110), the tire radio frequency transceiver unit (112) transmits a tire pressure information signal (S3), the method for combining tire pressure monitoring with keyless entry comprising the steps of:
transmitting a keyless entry radio frequency signal (S1) via the remote controller (20);
receiving the keyless entry radio frequency signal (S1) via the vehicle radio frequency transceiver unit (106), and unlocking the vehicle door lock (104);
starting the vehicle (10); and
changing an emitting cycle of the tire pressure information signal (S3) transmitted by the tire radio frequency transceiver unit (112) into a first cycle.

2. The method for combining tire pressure monitoring with keyless entry according to claim 1, wherein after the step of changing an emitting cycle of the tire pressure information signal (S3) transmitted by the tire radio frequency transceiver unit (112) into a first cycle, the method further comprising a step of changing the emitting cycle of the tire pressure information signal (S3) transmitted by the tire radio frequency transceiver unit (112) into a second cycle after the engine (102) is stopped, and the first cycle is shorter than or equal to the second cycle.

3. The method for combining tire pressure monitoring with keyless entry according to claim 2, wherein the first cycle is once every ten seconds, and the second cycle is once every twenty minutes.
